# EUROPÄISCHE PATENTANMELDUNG

(11) **EP 1 916 822 A1**
(43) Veröffentlichungstag der Anmeldung: **30.04.2008**
(21) Anmeldenummer: 06122930.8
(22) Anmeldetag: 25.10.2006
(51) Int. Cl.: H04L 29/08, H04L 29/06, H04L 29/12, H04L 12/28

(54) **Verfahren und System für einen Kommunikationsknoten mit mehreren Netzwerkschnittstellen**

(71) Anmelder: Swisscom Mobile AG, 3050 Bern (CH)
(72) Erfinder: Danzeisen, Marc, 3063, Ittigen (CH); Heissenbüttel, Marc, 3011, Bern (CH); Linder, Jan, 3013, Bern (CH); Aeschlimann, Felix, 3114, Wichtrach (CH)
(74) Vertreter: BOVARD AG

(57) **Zusammenfassung**

Die Erfindung bezieht sich auf ein Verfahren und ein System für einen Kommunikationsknoten mit mehreren Netzwerkschnittstellen. Es wird ein Datenpaket von einer Applikation des Kommunikationsknotens zur Übertragung über eine Netzwerkschnittstelle bereitgestellt. Dem Kommunikationsknoten wird eine IP Home-Adresse respektive ein Identifikator zugeordnet. Auf mindestens zwei der mehreren Netzwerkschnittstellen wird je eine IP Adresse zur Verbindung mit einem IP basierten Netzwerk konfiguriert. Die IP Adressen der Netzwerkschnittstellen werden der IP Home Adresse respektive dem Identifikator zugeordnet abgespeichert werden. Mittels eines Datenrouting-Moduls wird mindestens ein Parameter der mindestens zwei Netzwerkschnittstellen ausgewertet, wobei basierend auf dieser Auswertung mindestens eine Netzwerkschnittstelle selektiert wird und wobei das mindestens eine durch eine Applikation bereitgestellte Datenpaket über die mindestens eine selektierte Netzwerkschnittstelle übertragen wird.

## Beschreibung

### Technisches Gebiet

Die vorliegende Erfindung betrifft ein Verfahren und ein System für einen Kommunikationsknoten mit mehreren Netzwerkschnittstellen, wobei mindestens ein Datenpaket von einer Applikation des Kommunikationsknotens zur Übertragung über eine Netzwerkschnittstelle bereitgestellt wird und wobei dem Kommunikationsknoten eine IP Home Adresse respektive ein Identifikator zugeordnet wird.

### Stand der Technik

Kommunikationsknoten und Kommunikationsnetzwerke werden im Stand der Technik in vielfältigsten Ausgestaltungen hergestellt, installiert, betrieben und verwendet. Ein Kommunikationsknoten kann sich dabei auf irgendein Gerät mit einer oder mehreren angebrachten Netzwerkschnittstellen, wie beispielsweise auf einen festinstallierten Personal Computer, auf ein mobiles Notebook, auf ein mobiles Telefon, auf einen PDA (Personal Digital Assistant), auf eine Spielkonsole oder auf irgendein anderes Gerät mit angebrachten Netzwerkschnittstellen beziehen. Mittels den am Kommunikationsknoten angebrachten Netzwerkschnittstellen können Kommunikationsverbindungen zu Kommunikationsnetzwerken wie beispielsweise zu Ethernet-Netzwerken, zu PSTN Netzwerken (PSTN: Public Switched Telephone Network), zu Mobilfunknetzwerken wie GSM- oder UMTS-Mobilfunknetzwerken (GSM: Global System for Mobile Communications, UMTS: Universal Mobile Telecommunications System), zu drahtlosen WLAN Netzwerken (WLAN: Wireless Local Area Network), zu Funknetzen, welche gemäss dem WiMAX-Standard (WiMAX: Worldwide Interoperability for Microwave Access) betrieben werden, zu Netzwerken, welche gemäss der UWB (UWB: Ultra Wide Band) Technologie betrieben werden, zu ATM Netzwerken (ATM: Asynchronous Transfer Mode), zu Bluetooth-Netzwerken oder zu irgendwelchen anderen Kommunikationsnetzwerken erstellt werden. Selbstverständlich können in solchen Kommunikationsnetzwerken verschiedenste Verfahren des Standes der Technik zur Datenübertragung, wie beispielsweise ein HSDPA-Verfahren (HSDPA: High Speed Downlink Packet Access), verwendet werden. Beispielsweise basierend auf den erwähnten Netzwerken können insbesondere auch Kommunikationsverbindungen zu IP Netzwerken (IP: Internet Protocol) erstellt werden.

Kommunikationsknoten werden von Benutzern in unterschiedlicher Art und Weise verwendet. So kann ein Benutzer einen Kommunikationsknoten dazu verwenden, um E-Mail Nachrichten zu lesen, um auf dem Internet nach Dokumenten zu suchen, um über eine VPN Verbindung (VPN: Virtual Private Network) auf Daten eines Intranets zuzugreifen, um eine Audio- oder Videodatei herunterzuladen und abzuspielen, um eine audio-und/oder videobasierte Telefonverbindung aufzubauen oder um beispielsweise auf Daten eines anderen Kommunikationsknotens zuzugreifen. Statt fest installierter Kommunikationsknoten mit drahtbasierten Netzwerkschnittstellen, wie z.B. ein Personal Computer mit einer twisted-pair Ethernet Netzwerkschnittstelle, werden immer öfters mobile Kommunikationsknoten mit drahtlosen Netzwerkschnittstellen, wie z.B. ein Notebook mit einer WLAN Netzwerkschnittstelle, verwendet. Oft verfügen solche mobile Kommunikationsknoten über mehrere drahtlose Netzwerkschnittstellen zur Verbindung mit unterschiedlichen drahtlosen Kommunikationsnetzwerken. So kann ein mobiler Kommunikationsknoten beispielsweise eine Netzwerkschnittstelle zur Erstellung einer GPRS basierten (GPRS: General Packet Radio Service), einer EDGE basierten (EDGE: Enhanced Data Rates for GSM Evolution), einer UMTS basierten (UMTS: Universal Mobile Telecommunications System), einer HSDPA basierten (HSDPA: High Speed Downlink Packet Access) oder einer WLAN basierten (WLAN: Wireless Local Area Network) Kommunikationsverbindung umfassen. Je nach Standort des Kommunikationsknotens und je nach Verbreitung von entsprechenden Kommunikationsnetzwerken, kann mittels der Netzwerkschnittstellen des Kommunikationsknotens jeweils an diesem Standort oft zwischen mehreren Kommunikationsverbindungen zu unterschiedlichen Kommunikationsnetzwerken ausgewählt werden, wobei der Benutzer des Kommunikationsendgeräts eines dieser Kommunikationsnetzwerke auswählt und eine Kommunikationsverbindung zu diesem Kommunikationsnetzwerk erstellt.

Im Stand der Technik haben sich IP basierte Kommunikationsnetzwerke (IP: Internet Protocol) weit verbreitet. So basiert der Zugriff auf E-Mail Nachrichten, der Zugriff auf elektronische Zeitungsartikel, das Herunterladen von Audio- oder Videodateien oder die Erstellung von Audio- oder Videotelefonieverbindungen vielfach auf IP basierten Kommunikationsverbindungen. Bei einer IP basierten Kommunikationsverbindungen zwischen Kommunikationsknoten werden den Kommunikationsknoten IP Adressen zugeordnet, wobei Daten als IP Datenpakete zwischen den Kommunikationsknoten über das IP basierte Kommunikationsnetzwerk entsprechend der IP Adressen der Kommunikationsknoten gesendet werden. Die IP Adresse eines Kommunikationsknotens ergibt sich dabei aus dem Anbindungspunkt des Kommunikationsknotens an das IP basierte Kommunikationsnetzwerk. Der Anbindungspunkt eines Kommunikationsknotens an das IP basierte Kommunikationsnetzwerk kann insbesondere für mobile Kommunikationsknoten durch einen Standortwechsel des mobilen Kommunikationsknotens immer wieder neu festgelegt werden, sodass einer Netzwerkschnittstelle eines mobilen Kommunikationsknotens je nach Standort des Kommunikationsknotens eine andere IP Adresse zur Kommunikation über das IP basierte Kommunikationsnetzwerk zugeteilt wird. Durch den Wechsel der IP Adresse entsteht jedoch unter anderem das Problem, dass bestehende Kommunikationsverbindungen unterbrochen werden oder dass der mobile Kommunikationsknoten durch den Wechsel der IP Adresse nicht mehr zugreifbar ist.

Im RFC 3344 "IP Mobility Support for IPv4" (RFC: Request for Comments) der IETF (IETF: Internet Engineering Task Force) wird ein Verfahren beschrieben, um die transparente Vermittlung von IP Datenpaketen an mobile Kommunikationsknoten sicherzustellen. Dem mobilen Kommunikationsknoten wird eine IP Home Adresse zugeteilt, wobei diese IP Home Adresse auf einem Home Agent konfiguriert wird. Der Home Agent kann beispielsweise als Softwaremodul eines Netzwerkservers ausgestaltet sein. Bei der Anbindung des mobilen Kommunikationsknotens an das IP basierte Kommunikationsnetzwerk, wird dem mobilen Kommunikationsknoten eine dem Anbindungspunkt entsprechende IP Adresse zugeteilt. Diese IP Adresse wird an den Home Agent übermittelt und als IP Care-of Adresse registriert. Datenpakete welche an die IP Home Adresse gesendet werden, werden anschliessend vom Home Agent an die IP Care-of Adresse weitergeleitet.

Neben dem RFC 3334 gibt es eine ganze Reihe weiterer Standards, welche die transparente Vermittlung von Datenpaketen an mobile Kommunikationsknoten betreffen. Insbesondere sei hier der IPv6 Standard sowie die IPv6 Mobile IP Standard Familie erwähnt. So beschreibt das Dokument RFC 2460 die "Internet Protocol, Version 6 (IPv6) Specification" und das Dokument RFC 3775 den "Mobility Support in IPv6".

Es wurde ebenfalls von der IETF der Internet Draft "Host Identity Protocol Architecture" herausgegeben. Die HIP Architektur (HIP: Host Identity Protocol) wurde definiert, um die Funktionalität der Identifikation eines Hosts und die Funktionalität der Identifikation des Standorts dieses Hosts getrennt verwalten zu können. Eine IP Adresse vereinigt diese beiden Funktionalitäten, da mit der IP Adresse sowohl der Host an sich, als auch der Standort dieses Hosts im Netzwerk identifiziert wird. Gemäss der HIP Architektur wird einem Kommunikationsknoten, welcher eine Netzwerkschnittstelle mit einer IP Adresse umfasst, ein Host Identifier zugeordnet. Der Host Identifier kann lokal auf dem Kommunikationsknoten als statistisch eindeutige Grösse erzeugt werden, wobei der Host Identifier mittels einer Hash Funktion in einen Host Identity Tag von 128-bit Länge abgebildet wird. Dem Host Identity Tag wird die IP-Adresse der Netzwerkschnittstelle des Kommunikationsknotens zugeordnet. Die Transportschicht Protokolle wie TCP oder UDP werden anschliessend an Host Identities gebunden (statt an IP Adressen), sodass Verbindungsanfragen zu einem Kommunikationsknoten immer über einen Host Identity Tag erfolgen. Die Zuordnung eines Host Identity Tag zu einer IP Adresse kann in einem speziellen, ständig verfügbaren Verzeichnis, dem so genannten Rendezvous-Server, kontinuierlich nachgeführt werden.

Aus dem Internet Draft "Host Identity Protocol Architecture" ist im Mai 2006 der RFC 4423 "Host Identity Protocol (HIP) Architecture" entstanden. In die Familie dieser Dokumente gehören auch die Internet Drafts "Host Identity Protocol", "End-Host Mobility and Multihoming with the Host Identity Protocol", "Host Identity Protocol (HIP) Domain Name System (DNS) Extensions", "Host Identity Protocol (HIP) Rendevous Extension", "Using ESP transport format with HIP" und "Host Identity Protocol (HIP) Registration Extension".

Ein Nachteil des Standes der Technik ist es jedoch, dass Netzwerkschnittstellen eines Kommunikationsknotens, welcher zwar verschiedene Netzwerkschnittstellen wie insbesondere WLAN Schnittstellen, UMTS Schnittstellen oder GSM Schnittstellen umfassen kann, nicht optimal genutzt werden können. So ist im Stand der Technik beispielsweise eine Zuordnung einer Netzwerkschnittstelle auf eine Applikation des Kommunikationsknotens nicht möglich. Es ist auch ein Nachteil des Standes der Technik, dass Kommunikationsverbindungen trotz der erwähnten Verfahren unvermittelt abbrechen können. In der europäischen Patentschrift EP 1 271 896 wird ein Verfahren für mobile IP Nodes mit mehreren Netzwerkschnittstellen in heterogenen Netzwerken beschrieben, wobei eine dynamische IP Care-of Adresse einer IP Home Adresse eines mobilen Kommunikationsknotens zugeordnet wird, und wobei die IP Care-of Adresse den aktuellen Standort des mobilen Kommunikationsknotens angibt. Ein Schnittstellenverwaltungsmodul erstellt eine Lookup-Tabelle mit verfügbaren Netzwerkschnittstellen des Kommunikationsknotens. Applikationen greifen auf eine virtuelle IP Netzwerkschnittstelle zu, wobei die virtuelle IP Netzwerkschnittstelle über das Schnittstellenverwaltungsmodul mit einer Netzwerkschnittstelle verbunden ist, und wobei bei einem Wechsel der Netzwerkschnittstelle des mobilen Kommunikationsknotens die Anbindung der virtuellen IP Netzwerkschnittstelle an eine Netzwerkschnittstelle mittels des Schnittstellenverwaltungsmoduls basierend auf der Lookup-Tabelle aktualisiert wird. Ein Nachteil dieses Verfahrens ist es, dass jeweils nur eine Netzwerkschnittstelle aktiv sein kann und somit Datenpakete nur über eine einzelne Netzwerkschnittstelle übertragen werden können. Es ist weiter ein Nachteil dieses Verfahrens, dass eine Datenverbindung unvermittelt abbrechen kann.

### Darstellung der Erfindung

Es ist eine Aufgabe der vorliegenden Erfindung, ein neues Verfah-ren und ein neues System für einen Kommunikationsknoten mit mehreren Netzwerkschnittstellen vorzuschlagen, welches Verfahren und welches System nicht die Nachteile des Standes der Technik aufweisen.

Gemäss der vorliegenden Erfindung werden diese Ziele insbeson-dere durch die Merkmale der unabhängigen Ansprüche erreicht. Weitere vor-teilhafte Ausführungsformen gehen ausserdem aus den abhängigen Ansprü-chen und der Beschreibung hervor.

Insbesondere werden diese Ziele durch die Erfindung dadurch er-reicht, dass auf mindestens zwei der mehreren Netzwerkschnittstellen je eine IP Adresse zur Verbindung mit einem IP basierten Netzwerk konfiguriert wird, wobei die IP Adressen der Netzwerkschnittstellen der IP Home Adresse respektive dem Identifikator zugeordnet abgespeichert werden, dass mittels eines Datenrouting-Moduls mindestens ein Parameter der mindestens zwei Netzwerkschnittstellen ausgewertet wird, wobei basierend auf dieser Auswertung mindestens eine Netzwerkschnittstelle selektiert wird und wobei das mindestens eine durch eine Applikation bereitgestellte Datenpaket über die mindestens eine selektierte Netzwerkschnittstelle übertragen wird. Ein solches Verfahren hat insbesondere den Vorteil, dass mehrere Netzwerkschnittstellen des Kommunikationsknotens aktiv sein und für die Übertragung von Datenpaketen genutzt werden können. Dadurch dass gleichzeitig mehrere Netzwerkschnittstellen des Kommunikationsknotens aktiv sein können, wird sichergestellt, dass ein Abbruch von Datenverbindungen sehr viel weniger wahrscheinlich ist und dass ein stark verbesserter Handover bei einem Standortwechsel erzielt wird. Ein solches Verfahren hat auch den Vorteil, dass eine Netzwerkschnittstelle einer Applikation zugeordnet werden kann und somit einer Applikation eine den Anforderungen der Applikation entsprechende Netzwerkschnittstelle zur Verfügung gestellt werden kann.

In einer Ausführungsvariante werden als Parameter der mindestens zwei Netzwerkschnittstellen die verfügbare Übertragungskapazität, die aktuelle Übertragungsqualität und/oder die aktuelle Übertragungsrate der mindestens zwei Netzwerkschnittstellen ausgewertet. Selbstverständlich können auch andere Parameter der Netzwerkschnittstellen, wie beispielsweise ein Kollisionsparameter oder eine Data Retransmission Rate ausgewertet werden. Eine solche Ausführungsvariante hat insbesondere den Vorteil, dass eine Netzwerkschnittstelle gemäss auf der Netzwerkschnittstelle üblicherweise erfassten Parameter für die Übertragung eines Datenpaketes selektiert werden kann und somit keine zusätzlichen Vorrichtungen zur Erfassung von Parametern an den Netzwerkschnittstellen angebracht werden müssen.

In einer anderen Ausführungsvariante wertet das Datenrouting-Modul mindestens einen Parameter einer Applikation des Kommunikationsknotens und/oder mindestens einen Parameter des bereitgestellten Datenpakets aus, wobei eine Netzwerkschnittstelle basierend auf dieser Auswertung selektiert wird. Eine solche Ausführungsvariante hat insbesondere den Vorteil, dass eine Netzwerkschnittstelle einer bestimmten Applikation oder einem bestimmten Datenstrom zugeordnet werden kann.

In einer weiteren Ausführungsvariante wird dem Kommunikationsknoten gemäss dem Mobile IP Standard eine IP Home Adresse zugeordnet respektive es wird dem Kommunikationsknoten gemäss dem Host Identity Protocol ein Identifikator zugeordnet. Eine solche Ausführungsvariante hat insbesondere den Vorteil, dass die Zuordnung der IP Home Adresse respektive des Identifikators mittels verfügbaren Technologien erfolgt und somit bestehende Infrastrukturen genutzt werden können.

In einer anderen Ausführungsvariante wird die Konfiguration einer IP Adresse einer Netzwerkschnittstelle mittels eines DHCP-Protokolls durchgeführt. Eine solche Ausführungsvariante hat insbesondere den Vorteil, dass die Konfiguration der Netzwerkschnittstellen mittels robusten und weit verbreiteten Technologien durchgeführt wird. Selbstverständlich sind neben dem DHCP-Protokoll weitere robuste und weit verbreitete Technologien zur Konfiguration einer IP Adresse bekannt. Eine Auswahl solcher Technologien wird später beschrieben.

In einer weiteren Ausführungsvariante werden mehrere Netzwerksch nittstellen selektiert, wobei das mindestens eine Datenpaket über jede der mehreren selektierten Netzwerkschnittstellen übertragen wird. Eine solche Ausführungsvariante hat insbesondere den Vorteil, dass Datenpakete mit einer sehr hohen Zuverlässigkeit übertragen werden können.

### Kurze Beschreibung der Zeichnungen

Nachfolgend werden Ausführungsvarianten der vorliegenden Erfin-dung anhand von Beispielen beschrieben. Die Beispiele der Ausführungen wer-den durch folgende beigelegte Figur illustriert:

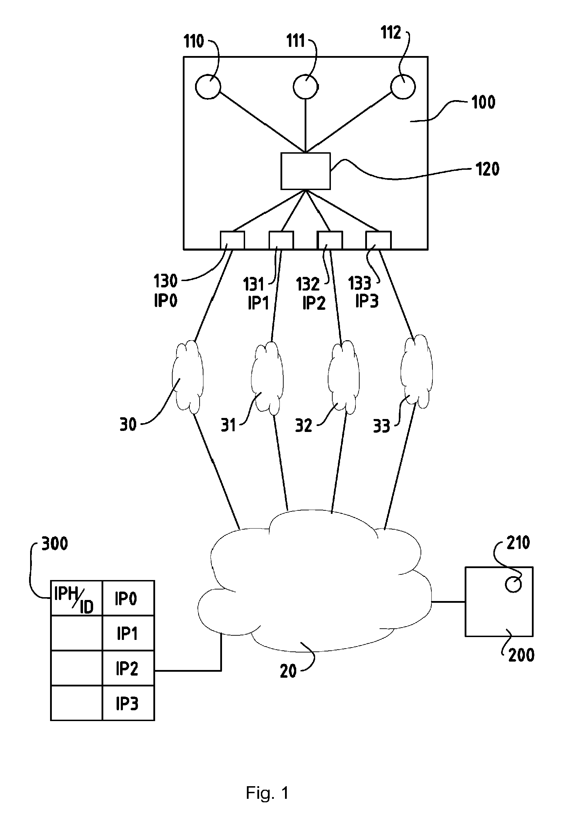

Figur 1 zeigt ein Blockdiagramm mit den einzelnen Bestandteilen eines erfindungsgemässen Verfahrens und Systems für einen Kommunikationsknoten mit mehreren Netzwerkschnittstellen.

### Weg(e) zur Ausführung der Erfindung

In Figur 1 bezieht sich das Bezugszeichen 100 auf einen Kommunikationsknoten. Der Kommunikationsknoten 100 kann irgendein Kommunikationsknoten zur Kommunikation über ein Kommunikati onsnetzwerk sein, wie beispielsweise ein mobiles Telefon für die Kommunikation über ein GSM- oder UMTS-Kommunikationsnetzwerk, ein mobiles Notebook zur Kommunikation über ein WLAN Kommunikationsnetzwerk oder ein festinstallierter Computer zur Kommunikation über ein Ethernet-Kommunikationsnetzwerk.

Der Kommunikationsknoten 100 umfasst mehrere Netzwerkschnittstellen 130, 131, 132, 133 zur Kommunikation über verschiedene Kommunikationsnetzwerke 30, 31, 32, 33. In Figur 1 sind vier Netzwerkschnittstellen und vier Kommunikationsnetzwerke gezeichnet. Es sei hier erwähnt, dass sich das erfindungsgemässe Verfahren auf eine beliebige Anzahl von Netzwerkschnittstellen respektive Kommunikationsnetzwerke bezieht. Die Kommunikationsnetzwerke 30, 31, 32, 33 können sich auf irgendwelche Kommunikationsnetzwerke beziehen, beispielsweise auf Kommunikationsnetzwerke unterschiedlicher Technologien, wie auf ein GSM-, auf ein UMTS-, auf ein WLAN- oder auf ein Ethernet-Kommunikationsnetzwerk, oder auf Kommunikationsnetzwerke gleicher Technologien, wie beispielsweise auf ein GSM Kommunikationsnetzwerk eines ersten Anbieters eines GSM Kommunikationsnetzwerks und auf ein GSM Kommunikationsnetzwerk eines zweiten Anbieters eines GSM Kommunikationsnetzwerks. Selbstverständlich können sich die Kommunikationsnetzwerke gleicher Technologien nicht nur auf GSM Kommunikationsnetzwerke beschränken, sondern sich auf WLAN Kommunikationsnetzwerke, Ethernet-Kommunikationsnetzwerke, UMTS Kommunikationsnetzwerke oder auf irgendwelche anderen Kommunikationsnetzwerke beziehen. Die Kommunikationsnetzwerke 30, 31, 32, 33 können sich insbesondere auch auf IP basierte (IP: Internet Protocol) Kommunikationsnetzwerke beziehen. Innerhalb solcher Kommunikationsnetzwerke der gleichen Technologie können administrative Domänen gebildet werden, wie beispielsweise eine administrative Domäne zur Administration verschiedener IP Subnetze. Kommunikationsnetzwerke gleicher Technologien können aber auch durch administrative Domänen, wie einer Domäne für Benutzer einer ersten Benutzerklasse und einer Domäne für Benutzer einer zweiten Benutzerklasse, voneinander getrennt sein. So kann sich eine erste Benutzerklasse auf Benutzer beziehen, welche einen Servicevertrag gemäss ersten Konditionen beziehen und eine zweite Benutzerklasse kann sich auf Benutzer beziehen, welche einen Servicevertrag gemäss zweiten Konditionen beziehen. Die Konditionen eines Servicevertrags können sich beispielsweise auf eine verfügbare Bandbreite, auf verfügbare Dienste wie E-Mail Dienste oder Nachrichten Dienste oder auf die Kosten des Servicevertrags beziehen. Mit einer solchen Trennung in Benutzerklassen können somit für unterschiedliche Benutzerklassen unterschiedliche Tarife und/oder Dienstqualitäten definiert werden. Selbstverständlich umfassen die Netzwerkschnittstellen 130, 131, 132, 133 alle erforderlichen Hardware- und Software-Komponenten, wie beispielsweise Busverbindungen, Decoder, Encoder, Modulatoren etc., um eine Kommunikationsverbindung zwischen dem Kommunikationsknoten 100 und den Kommunikationsnetzwerken 30, 31, 32, 33 zu erstellen.

In Figur 1 bezieht sich das Bezugszeichen 120 auf ein Datenrouting-Modul. Das Datenrouting-Modul 120 ist beispielsweise als ein auf einem Mikroprozessor des Kommunikationsknotens 100 ablauffähiges Softwaremodul ausgeführt. Der exakte Aufbau des Datenrouting-Moduls 120 wird etwas später detailliert beschrieben.

In Figur 1 beziehen sich die Bezugszeichen 110, 111 und 112 auf Applikationen des Kommunikationsknotens 100. Die Applikationen 110, 111 und 112 können sich beispielsweise auf einen E-Mail Client, auf einen Web-Browser oder auf einen Internet-Telephonie Client beziehen. Die Applikationen 110, 111 und 112 können gemäss standardisierten Verfahren eine Kommunikationsverbindung zu einem mit einem Kommunikationsnetzwerk 20 verbindbaren zweiten Kommunikationsknoten 200 respektive zu einer Applikation 210 des zweiten Kommunikationsknotens erstellen. Solche standardisierten Verfahren sind insbesondere aus IP basierten Kommunikationsnetzwerken bekannt. So kann eine Applikation 110, 111 oder 112 mittels der Angabe einer IP Adresse und einer Port-Nummer Daten an die Applikation 210 des Kommunikationsknotens 200 übermitteln. Es ist jedoch beispielsweise auch bekannt, Daten an die Applikation 210 gemäss dem HIP Protokoll zu übermitteln.

Das Datenrouting-Modul 120 verfügt nun einerseits über erste Schnittstellen zur Übertragung von Datenpaketen zwischen den Netzwerkschnittstellen 130, 131, 132, 133 und dem Datenrouting-Modul 120 sowie anderseits über zweite Schnittstellen zur Übertragung von Datenpaketen zwischen den Applikationen 110, 111, 112 und dem Datenrouting-Modul 120. Die ersten Schnittstellen sind derart ausgeführt, dass ein Datenpaket so an eine Netzwerkschnittstelle 130, 131, 132, 133 übertragen wird, wie wenn das Datenpaket von einer der Applikationen übertragen worden wäre. Dazu gehört insbesondere, dass entsprechende Headerinformationen des Datenpakets korrekt konfiguriert sind. Die zweiten Schnittstellen sind derart ausgeführt, dass eine solche zweite Schnittstelle aus Sicht der Applikation wie eine Netzwerkschnittstelle 130, 131, 132, 133 wirkt. Dazu gehört insbesondere, dass eine zweite Schnittstelle eine Anfrage in Bezug auf beispielsweise eine IP Adresse oder eine MAC Adresse mittels entsprechenden Konfigurationsdaten beantwortet. Mit anderen Worten emuliert das Datenrouting-Modul gegenüber den Applikationen 110, 111, 112 eine Netzwerkschnittstelle und gegenüber den Netzwerkschnittstellen 130, 131, 132, 133 eine Applikation.

Das Datenrouting-Modul 120 kann beispielsweise Tabellen zur Abspeicherung von Daten der Netzwerkschnittstellen 130, 131, 132, 133 umfassen. In solchen Tabellen kann beispielsweise abgespeichert sein, über welche Übertragungskapazität eine Netzwerkschnittstelle 130, 131, 132, 133 verfügt, welche aktuelle Übertragungsqualität durch eine Netzwerkschnittstelle 130, 131, 132, 133 erreicht wird und/oder mit welche aktuelle Übertragungsrate Daten übermittelt werden. Selbstverständlich können irgendwelche weiteren Daten der Netzwerkschnittstellen, wie beispielsweise statische Daten wie die MAC Adresse oder der zur Übertragung von Daten verwendete Standard, wie z.B. einem IEEE 802.x Standard, in einer solchen Tabelle abgespeichert werden.

So kann ein Datenpaket durch eine der Applikationen 110, 111, 112 bereitgestellt werden, wobei das Datenpaket an das Datenrouting-Modul 120 und durch das Datenrouting-Modul 120 an mindestens eine Netzwerkschnittstelle 130, 131, 132, 133 übertragen wird. Mit einem solchen Verfahren können Datenpakete gemäss definierbaren Kriterien von einer Applikation 110, 111, 112, an eine bestimmte Netzwerkschnittstelle 130, 131, 132, 133 übertragen werden. So kann das Datenrouting-Modul derart ausgeführt sein, dass ein Datenpaket einer Internet-Telefonie Applikation an die Netzwerkschnittstelle mit der höchsten verfügbaren Übertragungsqualität übertragen wird. Das Datenrouting-Modul kann auch derart ausgeführt sein, dass ein Datenpaket eines Web-Browsers an die Netzwerkschnittstelle mit der niedrigsten Kollisionsrate übertragen wird. Das Datenrouting-Modul kann auch derart ausgeführt sein, dass ein Datenpaket einer Applikation zur Auslösung von Geldtransaktionen an eine Netzwerkschnittstelle mit einer hohen Datensicherheit, wie beispielsweise eine GSM basierte Netzwerkschnittstelle, übertragen wird. Das Datenrouting-Modul kann auch derart ausgeführt sein, dass ein Datenpaket eines E-Mail Clients an eine Netzwerkschnittstelle mit einem besonders kostengünstigen Servicevertrag übertragen wird. In die Tabellen zur Abspeicherung von Daten der Netzwerkschnittstellen 130, 131, 132, 133 können aber beispielsweise auch nur eine Identifikation einer Netzwerkschnittstelle abgespeichert werden. Das Datenrouting-Modul 120 kann dann beispielsweise mit Applikationen des Kommunikationsknotens 100 zusammenwirken und es kann beispielsweise, sobald eine Applikation Daten sendet, einfach zufällig eine der Netzwerkschnittstellen 130, 131, 132, 133 ausgewählt werden oder es kann die nächste verfügbare Netzwerkschnittstelle 130, 131, 132, 133 ausgewählt werden.

Ein Datenpaket, welches in dieser Weise von einer Applikation an eine Netzwerkschnittstelle übertragen wird, wird anschliessend über eines oder mehrere der Netzwerke 30, 31, 32, 33 und das Netzwerk 20 beispielsweise an einen zweiten Kommunikationsknoten 200 übertragen. Sobald das Datenpaket von einer Netzwerkschnittstelle 130, 131, 132, 133 an das entsprechende Netzwerk 30, 31, 32, 33 übertragen wird, wird das Datenpaket die Zieladresse des zweiten Kommunikationsknotens 200 und beispielsweise den Zielport der Applikation 210 des zweiten Kommunikationsknotens 200 umfassen. Wie im Internet Protokoll Standard definiert, kann das Datenpaket so von der Applikation 210 empfangen werden und ausgewertet werden. Je nach dem welche Funktionen die Applikation 210 umfasst, also je nach dem ob es sich bei der Applikation 210 beispielsweise um einen Web Server oder um einen Internet Telefonie Client handelt, wird die Applikation 210 aufgrund von empfangenen Datenpaketen entsprechende Datenpakete an den Kommunikationsknoten 100 übermitteln. Bei einer solchen Übermittlung von Datenpaketen an den Kommunikationsknoten 100 kann als Zieladresse beispielsweise die Absenderadresse des empfangenen Datenpakets verwendet werden. In dieser Art kann beispielsweise eine bidirektionale Kommunikationsverbindung zwischen einer der Applikationen 110, 111, 112 und der Applikation 210 erstellt werden, wobei die Kommunikationsverbindung je nach dem dynamisch über verschiedene Netzwerke 30, 31, 32, 33 geführt wird.

Um ausgehend vom zweiten Kommunikationsknoten eine Kommunikationsverbindung zum Kommunikationsknoten 100 zu erstellen, kann dem Kommunikationsknoten 100 eine IP Home Adresse IPH respektive ein Identifikator ID zugeordnet werden. In einer Zuordnungstabelle 300 können die IP Adressen IP0, IP1, IP2, IP3 der Netzwerkschnittstellen 130, 131, 132, 133 der IP Home Adresse IPH respektive dem Identifikator ID zugeordnet abgespeichert werden. Die Zuordnungstabelle 300 kann beispielsweise als Datentabelle eines auf einem Server ablauffähigen Lookup-Moduls ausgeführt sein, wobei die Zugriffsadresse auf das Lookup-Modul den beteiligten Kommunikationsknoten bekannt ist. So kann beispielsweise bei einem Standortwechsel des Kommunikationsknotens 100 ein Netzwerk 30, 31, 32, 33 neu verfügbar werden und eine entsprechende Netzwerkschnittstelle 130, 131, 132, 133 kann beispielsweise durch einen entsprechenden DHCP Server für die Verbindung mit dem Netzwerk 30, 31, 32, 33 konfiguriert werden. Bei der Konfiguration der Netzwerkschnittstelle 130, 131, 132, 133 kann unter anderem auf der Netzwerkschnittstelle 130, 131, 132, 133 eine IP Adresse IP0, IP1, IP2, IP3 konfiguriert werden. Sobald die IP Adresse IP0, IP1, IP2, IP3 auf der Netzwerkschnittstelle konfiguriert ist, kann beispielsweise mittels eines entsprechenden Softwaremoduls des Netzwerkknotens 100 der entsprechende Eintrag in der Zuordnungstabelle 300 nachgeführt werden. In dieser Art können die der IP Home Adresse IPH respektive dem Identifikator ID zugeordneten IP Adressen IP0, IP1, IP2, IP3 in der Zuordnungstabelle 300 stets aktualisiert werden. Es ist beispielsweise auch möglich, dass durch das Lookup-Modul zu bestimmbaren Zeitpunkten überprüft wird, ob eine IP Adresse kontaktiert werden kann und, falls dies nicht der Fall ist, diese IP Adresse aus der Zuordnungstabelle entfernt wird.

Selbstverständlich kann die Konfiguration der Netzwerkschnittstelle 130, 131, 132, 133 durch andere Technologien statt durch einen DHCP Server erfolgen. Solche andere Technologien umfassen insbesondere das stateful autoconfiguration des IPv6 oder das stateless autoconfiguration, bei welcher eine IP Adresse IP0, IP1, IP2, IP3 der Netzwerkschnittstelle 130, 131, 132, 133 mittels einer MAC-Adresse und einer Netz- oder Subnezt-Adresse gebildet wird. Als Beispiel für die Konfiguration einer IP Adresse sei hier insbesondere auch PDP erwähnt (PDP: Packet Data Protocol).

Mit der Zuordnungstabelle 300 wird die Voraussetzung geschaffen, dass der Kommunikationskonten 100 vom zweiten Kommunikationsknoten 200, und damit von beliebigen Kommunikationsknoten, kontaktiert werden kann. Um eine Kommunikationsverbindung vom zweiten Kommunikationsknoten 200 zum Kommunikationsknoten 100 zu erstellen, können mittels des zweiten Kommunikationsknotens 200 und die durch den zweiten Kommunikationsknoten 200 wie erwähnt zugreifbare Zuordnungstabelle 300 die auf den Kommunikationsknoten 100 konfigurierten IP Adressen IP0, IP1, IP2, IP3 bestimmt werden. Aus den so bestimmten IP Adressen kann beispielsweise zufällig eine IP Adresse für den Aufbau einer oder mehrerer Kommunikationsverbindung zwischen dem zweiten Kommunikationsknoten 200 und dem Kommunikationsknoten 100 ausgewählt werden. Selbstverständlich kann jedoch beispielsweise der zweite Kommunikationsknoten Merkmale der den IP Adressen zugeordneten Netzwerkschnittstellen 130, 131, 132, 133 oder Netzwerke 30, 31, 32, 33 ermitteln. Solche Merkmale können sich beispielsweise auf die auf einer Netzwerkschnittstelle 130, 131, 132, 133 konfigurierte aktuelle Übertragungsrate, auf die durch eine Netzwerkschnittstelle 130, 131, 132, 133 gemessene Kollisionsrate von Datenpaketen des Netzwerks 30, 31, 32, 33 oder auf irgendein anderes Merkmal der Netzwerkschnittstelle 130, 131, 132, 133 oder des Netzwerks 30, 31, 32, 33 beziehen. Die Zuordnungstabelle 300 kann auch als verteilte oder partielle Tabelle aufgebaut sein. So kann die Zuordnungstabelle 300 auf einem oder mehreren Kommunikationsknoten 100, 200 abgespeichert sein, wobei die Kommunikationsknoten 100, 200 die Einträge in die Zuordnungstabelle 300 gemäss aktuellen Netzwerkschnittstellen 130, 131, 132, 133 , welche den Kommunikationsknoten durch irgendeine Art beispielsweise auch von entfernten weiteren Kommunikationsknoten bekannt werden, nachgeführt werden.

Die IP Home Adresse IPH kann dem Kommunikationsknoten 100 gemäss dem Mobile IP Standard zugeordnet werden. Der Verbindungsaufbau von einem zweiten Kommunikationsknoten 200 auf den Kommunikationsknoten 100 kann in diesem Fall gemäss dem Mobile IP Standard erfolgen. Der Identifikator ID kann dem Kommunikationsknoten 100 gemäss dem HIP Protokoll zugeordnet werden. Der Verbindungsaufbau von einem zweiten Kommunikationsknoten 200 auf den Kommunikationsknoten 100 kann in diesem Fall gemäss dem HIP Protokoll erfolgen.

## Patentansprüche

1. Verfahren für einen Kommunikationsknoten mit mehreren Netzwerkschnittstellen, wobei mindestens ein Datenpaket von einer Applikation des Kommunikationsknotens zur Übertragung über eine Netzwerkschnittstelle bereitgestellt wird, wobei dem Kommunikationsknoten eine IP Home Adresse respektive ein Identifikator zugeordnet wird, **dadurch gekennzeichnet, dass** auf mindestens zwei der mehreren Netzwerkschnittstellen je eine IP Adresse zur Verbindung mit einem IP basierten Netzwerk konfiguriert wird, wobei die IP Adressen der Netzwerkschnittstellen der IP Home Adresse respektive dem Identifikator zugeordnet abgespeichert werden, dass mittels eines Datenrouting-Moduls mindestens ein Parameter der mindestens zwei Netzwerkschnittstellen ausgewertet wird, wobei basierend auf dieser Auswertung mindestens eine Netzwerkschnittstelle selektiert wird und wobei das mindestens eine durch eine Applikation bereitgestellte Datenpaket über die mindestens eine selektierte Netzwerkschnittstelle übertragen wird.

2. Verfahren nach Anspruch 1, **dadurch gekennzeichnet, dass** als Parameter der mindestens zwei Netzwerkschnittstellen die verfügbare Übertragungskapazität, die aktuelle Übertragungsqualität und/oder die aktuelle Übertragungsrate der mindestens zwei Netzwerkschnittstellen ausgewertet werden.

3. Verfahren nach einem der Ansprüche 1 bis 2, **dadurch gekennzeichnet, dass** das Datenrouting-Modul mindestens einen Parameter einer Applikation des Kommunikationsknotens und/oder mindestens einen Parameter des bereitgestellten Datenpakets auswertet, wobei eine Netzwerkschnittstelle basierend auf dieser Auswertung selektiert wird.

4. Verfahren nach einem der Ansprüche 1 bis 3, **dadurch gekennzeichnet, dass** dem Kommunikationsknoten gemäss dem Mobile IP Standard eine IP Home Adresse zugeordnet wird respektive dass dem Kommunikationsknoten gemäss dem Host Identity Protocol ein Identifikator zugeordnet wird.

5. Verfahren nach einem der Ansprüche 1 bis 4, **dadurch gekennzeichnet, dass** die Konfiguration einer IP Adresse einer Netzwerkschnittstelle mittels eines DHCP-Protokolls durchgeführt wird.

6. Verfahren nach einem der Ansprüche 1 bis 5, **dadurch gekennzeichnet, dass** mehrere Netzwerkschnittstellen selektiert werden, wobei das mindestens eine Datenpaket über jede der mehreren selektierten Netzwerkschnittstellen übertragen wird.

7. System für einen Kommunikationsknoten mit mehreren Netzwerkschnittstellen, wobei mindestens ein Datenpaket von einer Applikation des Kommunikationsknotens zur Übertragung über eine Netzwerkschnittstelle bereitstellbar ist, wobei dem Kommunikationsknoten eine IP Home Adresse respektive ein Identifikator zuordenbar ist, **dadurch gekennzeichnet, dass** auf mindestens zwei der mehreren Netzwerkschnittstellen je eine IP Adresse zur Verbindung mit einem IP basierten Netzwerk konfigurierbar ist, wobei die IP Adressen der Netzwerkschnittstellen der IP Home Adresse respektive dem Identifikator zugeordnet abspeicherbar sind, dass mittels eines Datenrouting-Moduls mindestens ein Parameter der mindestens zwei Netzwerkschnittstellen auswertbar ist, wobei basierend auf dieser Auswertung mindestens eine Netzwerkschnittstelle selektierbar ist und wobei das mindestens eine durch eine Applikation bereitgestellte Datenpaket über die mindestens eine selektierte Netzwerkschnittstelle übertragbar ist.

8. System nach Anspruch 7, **dadurch gekennzeichnet, dass** als Parameter der mindestens zwei Netzwerkschnittstellen die verfügbare Übertragungskapazität, die aktuelle Übertragungsqualität und/oder die aktuelle Übertragungsrate der mindestens zwei Netzwerkschnittstellen auswertbar ist.

9. System nach einem der Ansprüche 7 bis 8, **dadurch gekennzeichnet, dass** mittels des Datenrouting-Moduls mindestens ein Parameter einer Applikation des Kommunikationsknotens und/oder mindestens ein Parameter des bereitgestellten Datenpakets auswertbar ist, wobei eine Netzwerkschnittstelle basierend auf dieser Auswertung selektierbar ist.

10. System nach einem der Ansprüche 7 bis 9, **dadurch gekennzeichnet, dass** dem Kommunikationsknoten gemäss dem Mobile IP Standard eine IP Home Adresse zuordenbar ist respektive dass dem Kommunikationsknoten gemäss dem Host Identity Protocol ein Identifikator zuordenbar ist.

11. System nach einem der Ansprüche 7 bis 10, **dadurch gekennzeichnet, dass** die Konfiguration einer IP Adresse einer Netzwerkschnittstelle mittels eines DHCP-Protokolls durchführbar ist.

12. System nach einem der Ansprüche 7 bis 11, **dadurch gekennzeichnet, dass** mehrere Netzwerkschnittstellen selektierbar sind, wobei das mindestens eine Datenpaket über jede der mehreren selektierbaren Netzwerkschnittstellen übertragbar ist.
